# EUROPÄISCHE PATENTSCHRIFT

(11) **EP 0 836 256 B1**
(45) Veröffentlichungstag und Bekanntmachung des Hinweises auf die Patenterteilung: **24.11.2004**
(21) Anmeldenummer: 97117579.9
(22) Anmeldetag: 10.10.1997
(51) Int. Cl.: H02B 1/00, H02H 9/04, H02B 1/24

(54) **Elektro-Hausinstallation**
Electrical domestic installation
Installation électrique domestique

(30) Priorität: 12.10.1996 DE 29617778 U
(43) Veröffentlichungstag der Anmeldung: 15.04.1998
(73) Patentinhaber: Phoenix Contact GmbH & Co. KG, 32825 Blomberg (DE)
(72) Erfinder: Danowsky, Volker Dipl-Ing, 32427 Minden (DE); Wolff, Gerhard Dipl-Ing, 32699 Extertal (DE)
(74) Vertreter: Elbertzhagen, Otto, Dipl.-Ing.

(56) Entgegenhaltungen:
- WO-A-92/02979
- DE-A- 2 751 256
- DE-A- 3 831 935
- DE-A- 4 015 301
- US-A- 4 642 733
- PETER HASSE: "personen- und sachschutz in niederspannungsanlagen" ELEKTROTECHNISCHE ZEITSCHRIFT ETZ, Bd. 105, Nr. 6/7, März 1984, Seiten 312-315, XP002052765

## Beschreibung

Die Erfindung bezieht sich auf eine Elektro-Hausinstallation mit einem die Hauptsicherungen für die Stromversorgung eines Gebäudes aufnehmenden Hausanschlußkasten und mit zumindest einer nachgeordneten, verbraucherseitigen Verteilervorrichtung, wie einem Verteilerkasten, und ferner mit einer Einrichtung zur Ableitung von Überspannungen, die eine abgezweigte Stichleitung mit Überspannungsableitern sowie vorgeschalteten Stichleitungssicherungen und eine ausgeführte Potentialausgleichsleitung aufweist.

Bei solchen Hausinstallationen werden die Überspannungsableiter, die vornehmlich der Ableitung der bei Blitzeinwirkung auftretenden Überspannungen dienen, in separaten, plombierten Installationsgehäusen im Leitungsverlauf zwischen dem Hausanschlußkasten und der Verteilervorrichtung, wie dem Zählerplatz, angeordnet. Eine ähnliche Anordnung der Überspannungsableiter ist aus der US 4,642,733 A bekannt, bei der es um die spezielle Ausbildung und Anordnung der Überspannungsableiter als Steckmodule geht.

Je nach Größe der Verbraucheranlage werden zusätzlich zu den Installationsgehäusen weitere Installationsmaßnahmen erforderlich, wozu weitere Abzweigkästen oder zusätzliche Absicherungen gehören. In den meisten Fällen hat man es in dem dem Hausanschlußkasten nachgeordneten Leitungsverlauf mit Verteilerkästen zu tun, von denen sich beispielsweise bei einem mehrstöckigen Haus auf jeder Etage zumindest einer befindet. Neben einem solchen Verteilerkasten wird gegebenenfalls ein Blitzstromableiterkasten vorgesehen, in welchem die Ableitungselemente angeordnet sind. Von hier muß die notwendige Potentialausgleichsleitung durch das Gebäude hindurch zu der Hauptpotentialausgleichsschiene hin verlegt werden, die unmittelbar mit dem Erdpotential in Verbindung steht. Noch aufwendiger gestaltet sich die Verlegung der Potentialausgleichsleitung, wenn die Einrichtung für die Ableitung von Überspannungen unmittelbar an dem betreffenden Verbraucher angeordnet ist. In jedem Falle werden bei den bekannten Überspannungsschutzsystemen die auftretenden Überspannungen und die mit ihnen verbundenen Stoßströme über erhebliche Strecken hinweg durch das Hauptleitungssystem hindurchgeleitet, weshalb trotz einer solchen Schutzeinrichtung das Risiko einer Personen- oder Brandgefährdung nicht ausgeschlossen ist.

Es ist auch schon vorgeschlagen worden, bei Hauptstromversorgungssystemen Blitzstromableiter in unmittelbarer Nähe der Hauseinführung anzuordnen. Hierbei soll die Verbindungsleitung zwischen den aktiven Leitern und den Blitzstromableitern möglichst kurz und schleifenfrei sein, allerdings wird der Einbau der Blitzstromableiter zwischen dem Hausanschlußkasten und dem verbraucherseitigen Zählerschrank oder unmittelbar nach dem Zähler in einem separaten, plombierbaren Gehäuse empfohlen. Abgesehen davon, daß in einem solchen Falle die Zuständigkeit für den Zugang zu dem separaten, plombierten Gehäuse, in welchem sich die Blitzstromableiter befinden, geregelt werden muß, ist eine solche Anordnung unpraktisch, weil eine einheitliche Wartung und Überprüfung oder erforderlichenfalls der sofortige Austausch der Hauptsicherungen und/oder der Blitzstromableiter nicht möglich ist.

Aus der DE 40 15 301 A1 ist eine Überspannungsschutzeinrichtung für elektrisch Anlagen bekannt, die ebenfalls für sich in einem separaten Gehäuse angeordnet ist. Hierin sind zwischen den Leitern des Netzes und den Überspannungsableitern Vorsicherungen vorgesehen, weil der Einsatz der bekannten Überspannungsschutzeinrichtung vornehmlich in Industrienetzen in Betracht kommt, in denen sehr hohe Ströme übertragen werden. Des weiteren sind die Überspannungsableiter mit einer Defektanzeige gekoppelt, wobei das Defektsignal einer zentralen Überwachungs- und Anzeigevorrichtung zugeführt wird.

Der Erfindung liegt die Aufgabe zugrunde, eine Elektro-Hausinstallation der eingangs genannten Art zu schaffen, die besonders wirkungsvoll und zugleich wartungs- und reparaturfreundlich ist.

Diese Aufgabe wird bei einer Elektro-Hausinstallation der gattungsbildenden Art nach der Erfindung durch die Elektro-Hausinstallation gemäß Anspruch 1 gelöst.

Für die Erfindung ist wesentlich, daß die Überspannungs- bzw. Überstromableitung, wie die Blitzstromableitung, unmittelbar am Gebäudeeintritt stattfindet, womit die Hauptstromleitungswege des jeweiligen Gebäudes nicht vom gesamten Blitzstoßstrom durchflossen werden und Isolations-Überbeanspruchungen dieser Leitungswege aufgrund von Überspannungen minimiert werden. Außerdem wird eine induktive Beeinflussung benachbarter Leitungswege durch die Ableitungsströme nahezu ausgeschlossen. Ferner ermöglicht die Anordnung der Einrichtung zur Ableitung der Überspannungen mit in dem Hausanschlußkasten eine Anbindung an den Hauptpotentialausgleich auf kürzestem Wege, da in aller Regel die Potentialausgleichsschiene oder dergl. in der Nachbarschaft des Hausanschlußkastens vorgesehen ist. In der Verbraucheranlage dient die gesamte Leitungslänge zwischen dem Hausanschlußkasten und der verbraucherseitigen Meß- bzw. Zählereinrichtung sowie den jeweils noch zusätzlich geschützten, einzelnen Verbrauchern als Entkopplungsinduktivität zu den nachgeordneten Ableitern, und es werden die Potentialausgleichsleitungen von solch anderen Verbrauchern oder Verteilungen nicht mit dem unmittelbar an der Gebäudeeinleitung abgeleiteten Blitzstoßstrom durchflossen.

Auch für die Energieversorgungsunternehmen bietet die Erfindung erhebliche Vorteile. Es werden die Meßeinrichtungen, vor allem die Zähler in den Verteilerkästen, nicht von den Blitzstoßströmen durchflossen, durch die diese Meßeinrichtungen zerstört werden könnten. Schäden im Hauptstromsystem der jeweiligen Kundenanlage und eine damit verbundene, beeinträchtigende Nichtverfügbarkeit elektrischer Energie bis zur vorgenommenen Reparatur lassen sich weitestgehend vermeiden. Außerdem entsteht ein Mehraufwand durch die erforderliche Neuplombierung des Hausanschlußkastens für das Energieversorgungsunternehmen im Fehlerfalle nicht. Sowohl bei herkömmlichen Blitzschutzeinrichtungen, bei denen im Fehlerfall der Kunde seine Anlage instandsetzen lassen muß, als auch bei der erfindungsgemäßen Hausinstallation, bei der gegebenenfalls die Stichleitungssicherungen zu erneuern sind, hat der Energieversorger im nachhinein den Hausanschlußkasten neu zu plombieren. Die Dimensionierung der Stichleitungssicherungen im Hausanschlußkasten erfolgt konform zu den einschlägigen Vorschriften, wie in der Bundesrepublik Deutschland zu den VDE-Bestimmungen. Falls vorhanden, können auch Konventionen des betreffenden Ernergieversorgungsunternehmens berücksichtigt werden.

Letztlich ist bei der erfindungsgemäßen Elektro-Hausinstallation auch der bauliche Aufwand geringer. Denn für die Einrichtung zur Ableitung der Überspannungen wird kein zu sätzliches Gehäuse benötigt, somit wird Platz- und Montageaufwand eingespart, zugleich werden damit Fehlerquellen eliminiert.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Die Zeichnung zeigt in
- Fig. 1: eine schematische Wiedergabe einer Gebäudeeintrittsstelle für eine elektrische Versorgungsleitung mit einem unmittelbar in diesem Bereich angeordneten Hausanschlußkasten und
- Fig. 2: eine gegenüber Figur 1 ergänzte Schaltungsanordnung innerhalb des Hausanschlußkastens.

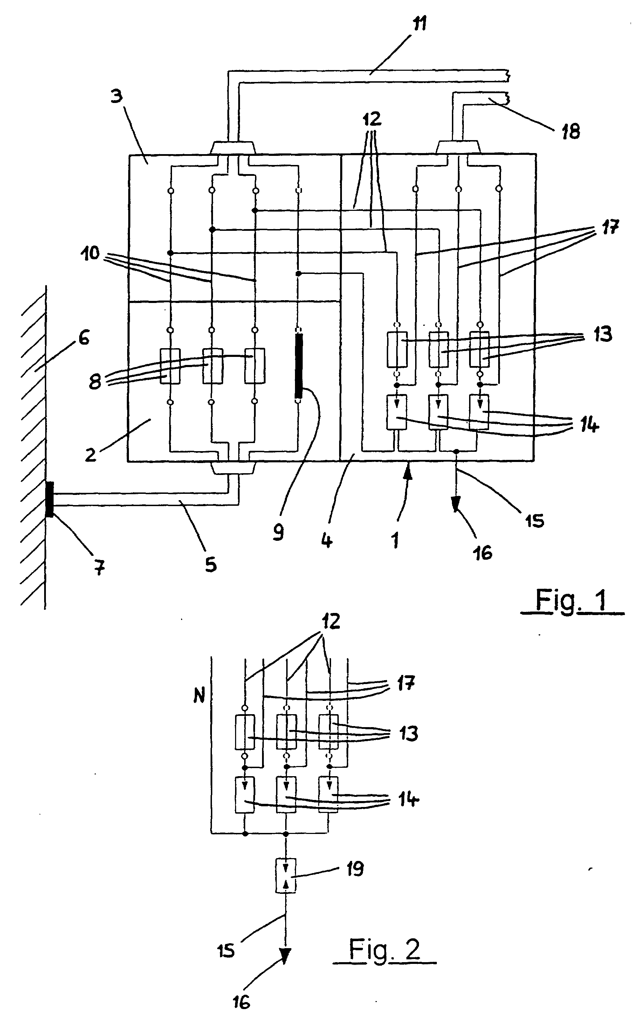

Im einzelnen erkennt man in Figur 1 einen Hausanschlußkasten 1, der sich in einen ersten Anschlußraum 2 für das jeweilige Energieversorgungsunternehmen (EVU), in einen zweiten Anschlußraum 3 für die jeweilige Verbraucheranlage und in einen dritten Raum 4 gliedert, auf den nachstehend noch gesondert eingegangen wird.

Der Hausanschlußkasten 1 ist beispielsweise im Keller eines Gebäudes, wie dem eines Wohnhauses, an oder nahe der Eintrittsstelle 7 einer Hauseinführungsleitung 5 angebracht, diese Hauseinführungsleitung 5 ist durch die betreffende Gebäude- oder Kellerwand 6 hindurchgeführt und in den EVU-seitigen Anschlußraum 2 des Hausanschlußkastens 1 eingeführt. Hierin befinden sich Hauptsicherungen 8, die in aller Regel nur dem EVU zugänglich sind. Weiter ist in dem EVU-seitigen Anschlußraum 2 noch ein Strombalken 9 für z. B. PEN-Leiter, N-Leiter oder PE- und N-Leiter (TN-C, TN-S, TT-Systeme) angeordnet. Ergänzend hierzu zeigt Figur 2 eine N-PE-Summen-Funkenstrecke 19, über die der N-Leiter gemeinsam mit den Ausgängen der Überspannungsableiter 14 mit der Potentiausgleichsleitung 15, 16 verbunden ist.

Die einzelnen abgesicherten Leiterstränge 10 der Hauseinführungsleitung 5 treten in den verbraucherseitigen Anschlußraum 3 innerhalb des Hausanschlußkastens 1 über, wo sie an eine verbraucherseitige Hauptleitung 11 angeschlossen sind, die zu einer oder mehreren Verteilervorrichtungen, wie Zählerkästen, führt.

Von den Leitersträngen 10 sind im verbraucherseitigen Anschlußraum 3 Stichleitungen 12 abgezweigt, die in den weiteren Raum 4 des Verteilerkastens 1 führen. Über Stichleitungssicherungen 13, die als Trennmesser, Schmelzsicherungen oder Sicherungsautomaten ausgebildet sein können, sind die Stichleitungen 12 je für sich an Überspannungsableitern 14 angeschlossen. Es kann sich hierbei um selbstzündende Blitzstromableiter handeln, die in Löschkammern mündende Funkenstrecken haben. Die Überspannungsableiter 14 sind gemeinsam mittels einer Potentialausgleichsleitung 15, 16, die aus dem Raum 4 des Anschlußkastens 1 herausgeführt ist, mit einer Potentialausgleichsschiene verbunden, die in üblicher Weise Erdpotential führt.

Aus Sicherheitsgründen kann der gesamte Raum 4 innerhalb des Anschlußkastens 1 gekapselt sein, in anderer Ausführung können auch nur die Überspannungsableiter 14 oder die Überspannungsableiter 14 einschließlich der Stichleitungssicherungen 13 innerhalb des Raums 4 des Hausanschlußkastens 1 in einem gekapselten Gehäuse angeordnet sein.

An die einzelnen Leiter der Stichleitung 12 sind jeweils Leiter 17 einer zu einer Störmeldeeinrichtung hinführenden Leitung 18 angeschlossen und zwar im abgesicherten Bereich zwischen den Stichleitungssicherungen 13 und den Überspannungsableitern 14. Ober das Störmeldesystem kann überwacht werden, ob die Einrichtung 13, 14 für die Ableitung von Überspannungen in Aktion war und gegebenenfalls die Stichleitungssicherungen 13 ausgetauscht werden müssen.

Die gesamte elektrische Installation innerhalb des Hausanschlußkastens 1, also insbesondere die Verdrahtung der Einrichtung 13, 14 zur Ableitung der Überspannungen ist an die jeweilige Netzform angepaßt.

Nach den hier geltenden elektrischen Sicherheitsbestimmungen und den Konventionen der Energieversorgungsunternehmen hat zu dem Verteilerkasten 1 mit seinen drei Anschlußräumen 2, 3 und 4 nur das jeweilige EVU Zugang. Deshalb ist der gesamte Hausanschlußkasten 1 unabhängig davon, ob für die Anschlußräume 2, 3 und 4 Einzelabdeckungen oder eine gemeinsame Abdeckung vorgesehen ist, plombierbar.

## Patentansprüche

1. Elektro-Hausinstallation für ein Gebäude, dessen Stromversorgung über eine an einer Gebäude-Eintrittsstelle (7) eingeführte Hauseinführeinleitung (5) erfolgt, die in einen Hausanschlußkasten (1) eingeführt ist, der sich nahe der Gebäude-Eintrittsstelle (7) befindet und in dem die Hauptsicherungen (8) für die Stromversorgung des Gebäudes angeordnet sind, wobei an die abgesicherten Leiterstränge (10) der Hauseinführungsleitung (5) eine verbraucherseitige Hauptleitung (11) anschließt, die zu zumindest einer nachgeordneten Verteilervorrichtung, wie einem Verteilerkasten, führt, und wobei ferner eine Einrichtung (13, 14) zur Ableitung und Begrenzung von Überspannungen vorhanden ist, die eine abgezweigte Stichleitung (12) mit Überspannungsableitern (14) sowie vorgeschalteten Stichleitungssicherungen (13) und eine herausgeführte Potentialausgleichsleitung (15, 16) aufweist, die an ein Ausgleichspotential, wie Erdpotential, angeschlossen ist,
**dadurch gekennzeichnet,**
**daß** die Einrichtung (13, 14) zur Ableitung und Begrenzung der Überspannungen in dem Hausanschlußkasten angeordnet ist, daß in dem Hausanschlußkasten (1) die Stichleitung (12) mit den Überspannungsableitern (14) unmittelbar mit der Ausgangsseite der Hauptsicherungen (8) im Anschlußkasten (1) verbunden ist und daß die Potentialausgleichsleitung (15) aus dem Hausanschlußkasten (1) herausgeführt ist.

2. Hausinstallation nach Anspruch 1,
**dadurch gekennzeichnet,**
**daß** am oder außerhalb des Hausanschlußkastens (1) eine Störmeldeeinrichtung vorgesehen ist, die über eine Leitung (18) mit der Einrichtung (13, 14) zur Ableitung der Überspannungen verbunden ist.

3. Hausinstallation nach Anspruch 2,
**dadurch gekennzeichnet,**
**daß** die Leiter (17) der zur Störmeldeeinrichtung hinführenden Leitung (18) zwischen den Stichleitungssicherugen (13) und den Überspannungsableitern (14) angeschlossen sind.

4. Hausinstallation nach einem der Ansprüche 1 bis 3,
**dadurch gekennzeichnet,**
**daß** die Verdrahtung der Einrichtung (13, 14) zur Ableitung der Überspannungen an die jeweilige Netzform angepaßt ist.

5. Hausinstallation nach einem der Ansprüche 1 bis 4,
**dadurch gekennzeichnet,**
**daß** der Hausanschlußkasten (1) plombierbar ist.

6. Hausinstallation nach einem der Ansprüche 1 bis 5,
**dadurch gekennzeichnet,**
**daß** die Stichleitungssicherungen (13) als Trennmesser, Schmelzsicherungen oder Sicherungsautomaten ausgebildet sind.

7. Hausinstallation nach einem der Ansprüche 1 bis 6,
**dadurch gekennzeichnet,**
**daß** die Einrichtung (13, 14) zur Ableitung und Begrenzung der Überspannungen innerhalb des Hausanschlußkastens (1) gekapselt ist.

8. Hausinstallation nach einem der Ansprüche 1 bis 7,
**dadurch gekennzeichnet,**
**daß** die Einrichtung (14) zur Ableitung und Begrenzung der Überspannungen als eine vormontierte, fest verdrahtete Einheit aus Überspannungsableitern ausgeführt ist.

9. Hausinstallation nach einem der Ansprüche 1 bis 7,
**dadurch gekennzeichnet,**
**daß** die Einrichtung (14) zur Ableitung und Begrenzung der Überspannungen aus einem Basisteil, dessen Stichleitungen (12) zwischen Basisteil und Leitersträngen (10) fest verdrahtet sind, und aus mindestens einem in diesem Basisteil einsteckbaren Überspannungsableiter besteht.

## Claims

1. Electrical domestic installation for a building whose power is supplied via an house supply lead-in line (5) that is introduced at an entry point (7) to the building, which house supply lead-in line is introduced into a mains connection box (1) that is located close to the building entry point (7), and in which the main fuses (8) for the power supply of the building are arranged, a consumer-side main line (11), which leads to at least one distribution device, such as a distribution box, arranged downstream, being connected to the fuse-protected conductor lines (10) of the house supply lead-in line (5), and a device (13, 14) for diverting and limiting excess voltages, which comprises a branch line (12) with surge diverters (14) and branch line fuses (13), connected upstream, and a led-out potential equalisation line (15, 16), which is connected to an equalising potential, such as an earth potential, also being provided, **characterised in that** the device (13, 14) for diverting and limiting excess voltages is arranged in the mains connection box, **in that**, in the mains connection box (1), the branch line (12) with the surge diverters (14) is directly connected to the output side of the main fuses (8) in the connection box (1), and **in that** the potential equalisation line (15) is led out of the mains connection box (1).

2. Domestic installation according to claim 1, **characterised in that** an interference reporting device, which is connected to the device (13, 14) for diverting excess voltages via a line (18), is provided on or outside the mains connection box (1).

3. Domestic installation according to claim 2, **characterised in that** the conductors (17) of the line (18) leading to the interference reporting device are connected between the branch line fuses (13) and the surge diverters (14).

4. Domestic installation according to any one of claims 1 to 3, **characterised in that** the wiring of the device (13, 14) for diverting excess voltages is adapted to the respective network structure.

5. Domestic installation according to any one of claims 1 to 4, **characterised in that** the mains connection box (1) may be sealed.

6. Domestic installation according to any one of claims 1 to 5, **characterised in that** the branch line fuses (13) are configured as isolating blades, safety fuses or automatic cut-outs.

7. Domestic installation according to any one of claims 1 to 6, **characterised in that** the device (13, 14) for diverting and limiting excess voltages is encapsulated within the mains connection box (1).

8. Domestic installation according to any one of claims 1 to 7, **characterised in that** the device (14) for diverting and limiting excess voltages is configured as a preassembled, fixedly wired unit comprising surge diverters.

9. Domestic installation according to any one of claims 1 to 7, **characterised in that** the device (14) for diverting and limiting excess voltages comprises a base part, whose branch lines (12) are fixedly wired between the base part and the conductor lines (10), and at least one surge diverter that may be inserted in this base part.

## Revendications

1. Installation électrique domestique pour bâtiment dont l'alimentation en courant est effectuée par l'intermédiaire d'une ligne d'alimentation domestique (5) qui, amenée à un point d'entrée de bâtiment (7), est conduite dans une boîte de raccordement domestique (1) qui est située à proximité du point d'entrée de bâtiment (7) et dans laquelle sont disposés les coupe-circuits principaux (8), pour l'alimentation en courant du bâtiment, les faisceaux de câbles sécurisés (10) de la ligne d'alimentation domestique (5) étant raccordés à une ligne principale côté consommateurs (11) qui comprend au moins une dispositif de distribution, installé en aval, tel qu'un coffret de distribution, et, de plus, une dispositif (13, 14) de dérivation et de limitation de surtensions étant prévu, lequel présente une ligne de protection (12) embranchée, avec des dérivateurs de surtensions (14) ainsi que des coupe-circuits (13) connectés en amont et un conducteur d'équipotentialité (15, 16) qui est raccordé à un potentiel de compensation, tel qu'un potentiel terrestre,
**caractérisée en ce que**
L'installation (13, 14) pour la dérivation et la limitation des surtensions est disposée dans la boîte de raccordement domestique et que, dans la boîte de raccordement domestique (1), la ligne de sécurité (12), avec les dérivateurs de surtensions (14), est directement reliée au côté sortie des coupe-circuits principaux (8), dans ladite boîte de raccordement (1), et que la ligne de compensation du potentiel (15) est conduite hors de ladite boîte de raccordement (1).

2. Installation domestique selon la revendication 1,
**caractérisée en ce que**,
la boîte de raccordement domestique est équipée d'un dispositif de signalisation d'anomalies qui est raccordé par l'intermédiaire d'une ligne (18) à l'installation (13, 14) de dérivation des surtensions.

3. Installation domestique selon la revendication 2,
**caractérisée en ce que**
le conducteur (17) de la ligne (28) conduisant au dispositif de signalisation d'anomalies (18) est raccordé entre les coupe-circuits du câble de dérivation (13) et les lignes de dérivation de surtensions (14).

4. Installation domestique selon l'une des revendications 1 à 3,
**caractérisée en ce que**
le câblage de l'installation de dérivation de surtensions (13, 14) est adapté à chaque forme de réseau.

5. Installation domestique selon l'une des revendications 1 à 3,
**caractérisée en ce que**
la boîte de raccordement domestique (1) peut être plombée.

6. Installation domestique selon l'une des revendications 1 à 3,
**caractérisée en ce que**
les coupe-circuits de sécurité du câble de dérivation (13) sont conçus en tant que couteaux de sectionnement, fusibles ou coupe-circuits automatiques.

7. Installation domestique selon l'une des revendications 1 à 3,
**caractérisée en ce que**
l'installation (13, 14) pour la dérivation et la limitation de surtensions est capsulée à l'intérieur de la boîte de connexions domestique (1).

8. Installation domestique selon l'une des revendications 1 à 3,
**caractérisée en ce que**
l'installation (14) pour la dérivation et la limitation des surtensions est exécutée sous la forme d'une unité pré-montée, à câblage fixe, composée de dérivateurs de surtensions.

9. Installation domestique selon l'une des revendications 1 à 3,
**caractérisée en ce que**
l'installation (14) pour la dérivation et la limitation des surtensions est composée d'un élément de base, dont les lignes de protection (12) sont câblées fixement entre ledit élément et les faisceaux de conducteurs (10), et au moins un dérivateur de surtensions enfichable dans cet élément de base.
